# EUROPEAN PATENT APPLICATION

(11) **EP 4 563 005 A1**
(43) Date of publication of application: **04.06.2025**
(21) Application number: 23398027.5
(22) Date of filing: 30.11.2023
(51) Int. Cl.: A23K 10/30, A23K 50/10

(54) **POSTPARTUM NUTRITIONAL SUPPLEMENT COMPOSITION FOR GOATS AND A PROCESS TO OBTAIN THE SAME**

(71) Applicant: Instituto Nacional de Investigação Agrária e Veterinária I.P., 2780-157 Oeiras (PT)
(72) Inventor: Belo, Ana Teresa Carmona, 2005-424 Vale de Santarém (PT); Pires dos Santos Cavaco Gonçalves, Sandra Cristina, 2780-157 Oeiras (PT); De Sousa Santa Clara Barbas, João Pedro, 2005-424 Vale de Santarém (PT); Neto Padre, Ludovina, 7002-554 ÉVORA (PT)
(74) Representative: Couto, Cláudia

(57) **Abstract**

The present application related to a postpartum nutritional supplement composition for goats. The composition is based in ethanolic extracts of *Pistacia lentiscus, Quercus coccifera and Olea europaea spp. sylvestris.*

This composition is intended to be added to concentrated feed for these animals in the postpartum period, when animals are confined to survey the kidding process and mother-kid bonding. The objective is to promote the intake of these compounds to reach sufficient levels that allow an anthelmintic action on the adult parasitic population, as well as, through their excretion in the feces together with the parasitic forms, consequently reducing environmental contamination, particularly of infectious forms. The present application also discloses a process to obtain said postpartum nutritional supplement composition for goats.

## Description

### Technical field

This application relates to a postpartum nutritional supplement composition for goats and a process to obtain the same.

### Background art

Several authors have documented the advantages of goats feeding on shrub vegetation, which is rich in bioactive compounds such as phenolic compounds whose main effects (antimicrobial, anthelmintic, antioxidant, anti-bloating, immune system stimulant) contribute to promoting animal health, performance (efficiency of protein utilization) and product quality (Rochfort et al., 2008). The review by Santos et al. (2019) shows that the main secondary metabolites associated with the anthelmintic effect are condensed tannins, saponins and flavonoids. On the other hand, growing public concern about the use of chemical and pharmaceutical products in ruminant production systems has generated great interest in the search for natural alternatives to the continuous use of synthetic anthelmintics.

The peri-partum period is one of the most demanding phases for goats in production, when their nutritional needs are increased by the development of the fetuses or the onset of lactation. This increased competition for nutrients leads to a temporary breakdown in the immune system. The impairment of immunity allows the development of larvae in hypobiosis and/or a greater establishment of new larvae, or even a greater prolificacy of the adults present, which results in an increase in the number of gastrointestinal strongyle (GIS) eggs eliminated in the feces (Notter et al. 2017). During this period, it is essential to ensure good mother-kid bonding and, to this end, it is management practice to keep the females in confinement for a few days, immediately before and/or after kidding. This management procedure allows offering to the animals supplemental bioactive compounds added to the ration usually provided at this production stage, comprising good quality hay and concentrated feed (commercial or farm formulated).

### Summary

The present invention relates to a postpartum nutritional supplement composition for goats comprising:
between 33.3 and 50 wt% of Pistacia lentiscus leaf extract; between 25 and 33.3 wt% of Quercus coccifera leaf extract; and
between 25 and 33.3 wt% of Olea europaea spp. sylvestris leaf extract;
with between 250 and 300 mg of total phenolic compounds in gallic acid equivalents per g of composition.

In one embodiment, the composition comprises the extracts in a proportion 35/32.5/32.5 wt%, respectively.

In one embodiment, the composition comprises the extracts in a proportion the extracts proportions 40/30/30 wt%, respectively.

In one embodiment, the composition comprises the extracts in a proportion the extracts proportions 45/27.5/27.5 wt%, respectively.

The invention also relates to a process to obtain the postpartum nutritional supplement composition for goats comprising the following steps:
- Collecting leaves from *Pistacia lentiscus, Quercus coccifera* and *Olea europaea spp. sylvestris* shrubs, drying the leaves at a temperature between 40 and 45° C, and grinding the dried leaves through a 1 mm sieve;
- Individually mixing the dried and ground leaves of each shrub with a 70% v/v ethanol solution, using between 725 and 775 mL of ethanol solution per 100 ± 5 g of dried leaves of each shrub;
- Submitting each ethanol mixture to a temperature between 40 and 45 °C in an ultra-sound bath for a time between 2 and 3 h, obtaining an ethanol extract solution from each shrub;
- Filtering and evaporating the ethanol from each extract solution at a temperature between 40 to 45 °C, with ventilation;
- Lyophilizing each extract solution;
- Determining the content of total phenolic compounds in gallic acid equivalents in each lyophilized extract;
- Combining the individual lyophilized extracts in a proportion:
   between 33.3 and 50 wt% of *Pistacia lentiscus* extract;
   between 25 and 33.3 wt% of *Quercus coccifera* extract; and
   between 25 and 33.3 wt% of *Olea europaea spp. sylvestris* extract.

In one embodiment, the lyophilized extracts are combined in a proportion of 35/32.5/32.5 wt%, respectively.

In one embodiment, the lyophilized extracts are combined in a proportion of 40/30/30 wt%, respectively.

In one embodiment, the lyophilized extracts are combined in a proportion of 45/27.5/27.5 wt%, respectively.

In one embodiment, the content of total phenolic compounds in the lyophilized extracts is measured by the Folin-Ciocalteau method.

The invention also relates to a concentrate feed for goats comprising the postpartum nutritional supplement composition.

### General description

The present invention relates to a postpartum nutritional supplement composition for goats and a process to obtain the same.

With the presently disclosed postpartum nutritional supplement composition, it is possible to control gastrointestinal parasitism, particularly to maintain control on the levels of gastrointestinal strongyles (GIS) eggs eliminated by goats browsing shrub vegetation. The main objective of the composition is the natural control of gastrointestinal parasitism in goats in postpartum confinement with a view to its use, for example, in organic livestock farming.

Nevertheless, although the disclosed composition is intended to enrich and supplement the concentrate feed provided to goats after kidding, for a period of 7 to 10 days, it may also be offered during lactation if the animals have limited access, or no access, to shrub vegetation. Feeding the animals with this composition intends to guarantee levels of total phenolic compounds ingested that will act in two stages: on the adult forms of GIS within the gastrointestinal tract, reducing their viability, and on the parasitic forms in the environment when excreted in the feces (eggs and larvae).

In addition, during the development of this invention, anti-helminthic tests using extracts from the shrub species *Pistacia lentiscus, Quercus coccifera* and *Olea europaea spp. Sylvestris* studied in quantitative coprocultures demonstrated the ovicidal and larvicidal effect of the presently disclosed composition.

At the beginning of production and grazing shrubs, goats, can ingest between 70 and 180 g of total phenolic compounds, in gallic acid equivalents (GAE), for an average dry matter (DM) intake of 2.70 ± 0.804 kg, with 60 to 80% of these phenolic compounds being attributed to the ingestion of shrubs.

The shrubs selected to extract bioactive compounds, such as phenolic compounds, to prepare the postpartum nutritional supplement composition, were *Pistacia lentiscus, Quercus coccifera* and *Olea europaea spp. Sylvestris* due to their widespread availability and total phenolic content.

Anthelmintic tests indicated greater efficacy in inhibiting the hatching of GIS eggs and larvicidal activity of infective forms for combinations of the three shrub species compared to individual use.

### Brief description of drawings

For easier understanding of this application, figures are attached in the annex that represent the preferred forms of implementation which nevertheless are not intended to limit the technique disclosed herein.
Figure 1 shows anthelmintic tests for the individual shrub extracts;
Figure 2 shows anthelmintic tests for combinations of the different shrub extracts.

### Detailed description of embodiments

Now, preferred embodiments of the present application will be described in detail with reference to the annexed drawings. However, they are not intended to limit the scope of this application.

The present invention relates to a postpartum nutritional supplement composition for goats and a process to obtain the same.

A postpartum nutritional supplement composition for goats comprising:
between 33.3 and 50 wt% of *Pistacia lentiscus* leaf extract;
between 25 and 33.3 wt% of *Quercus coccifera* leaf *extract;* and
between 25 and 33.3 wt% of *Olea europaea spp. sylvestris* leaf extract;
with between 250 and 300 mg of total phenolic compounds in gallic acid equivalents per g of composition.

In one embodiment, the composition comprises the extracts in a proportion 35/32.5/32.5 wt%, respectively.

In another embodiment, the composition comprises the extracts in a proportion the extracts proportions 40/30/30 wt%, respectively.

In another embodiment, the composition comprises the extracts in a proportion the extracts proportions 45/27.5/27.5 wt%, respectively.

Process to obtain a postpartum nutritional supplement composition for goats comprising the following steps:
- Collecting leaves from *Pistacia lentiscus, Quercus coccifera* and *Olea europaea spp. sylvestris* shrubs, drying the leaves at a temperature between 40 and 45° C, and grinding the dried leaves through a 1 mm sieve;
- Individually mixing the dried and ground leaves of each shrub with a 70% v/v ethanol solution, using between 725 and 775 mL of ethanol solution per 100 ± 5 g of dried leaves of each shrub;
- Submitting each ethanol mixture to a temperature between 40 and 45 °C in an ultra-sound bath for a time between 2 and 3 h, obtaining an ethanol extract solution from each shrub;
- Filtering and evaporating the ethanol from each extract solution at a temperature between 40 to 45 °C, with ventilation;
- Lyophilizing each extract solution;
- Determining the content of total phenolic compounds in gallic acid equivalents in each lyophilized extract;
- Combining the individual lyophilized extracts in a proportion:
   between 33.3 and 50 wt% of *Pistacia lentiscus* extract;
   between 25 and 33.3 wt% of *Quercus coccifera* extract; and between 25 and 33.3 wt% of *Olea europaea spp. sylvestris* extract.

In one embodiment, the lyophilized extracts are combined in a proportion of 35/32.5/32.5 wt%, respectively.

In another embodiment, the lyophilized extracts are combined in a proportion of 40/30/30 wt%, respectively.

In another embodiment, the lyophilized extracts are combined in a proportion of 45/27.5/27.5 wt%, respectively.

In one embodiment, the content of total phenolic compounds in the lyophilized extracts is measured by the Folin-Ciocalteau method.

After obtaining the postpartum nutritional supplement composition, the same is mixed with concentrate feed suitable for goats. The concentrate feed is either commercial or farm formulated, and specific for lactating goats. The postpartum nutritional supplement composition is mixed with the concentrate feed in an amount considering the adequate total g DM of total phenolic compounds to be supplemented to the animal, according to the level of milk production.

In a preferred embodiment, the postpartum nutritional supplement composition is mixed with concentrate feed in a proportion considering the level of target daily intake of total phenolics and the level of concentrate feed according to the nutritional requirements of the producing female. In one embodiment, the postpartum nutritional supplement composition is added between 200 and 600 g per kg of concentrate feed.

The distribution to the animals should ensure the daily intake of total phenolic compounds between 50 and 100 g GAE, considering the assumptions made from the experimental data, as the amount of daily total phenolics provided from the shrubs' intake.

The temperature referred in different steps in the process, between 40° and 45°C, is an adequate temperature to prevent deterioration of the bioactive compounds of the composition, such as the phenolic compounds.

### Experimental data

For the development of this invention, several assumptions were considered based on data obtained from lactating goats, both grazing and browsing on shrub vegetation, as described below, to estimate the amount of total phenolic compounds ingested per day. The data obtained lead to the development of the postpartum nutritional supplement composition for goats of the present invention.

Estimates of shrub species selected by the goats at 60 days of lactation and the daily intake of total phenolic compounds were obtained using the n-alkanes and long-chain alcohols technique (Ferreira et al., 2005; 2012). Table 1 presents data obtained for the selectivity and intake for each component of the goats' diets (g DM/day), as well as total phenolics (g GAE/day) intake. These results show the relevant role of browsing to provide the animals with phenolic compounds.

**Table 1. Intake for each component of the goats' diet from shrub/plant species and feeds.**

| **Plant species and feeds** | **Total Phenol**. **(mg GAE/g** | **% selectivity** | | | | | **g DM/day** | | | | | **Total Phenolics (g GAE/day)** | | | | |
|---|---|---|---|---|---|---|---|---|---|---|---|---|---|---|---|---|
| | **DM)** | **Goat 1** | **Goat 2** | **Goat 3** | **Goat 4** | **GoatS** | **Goat 1** | **Goat 2** | **Goat 3** | **Goat 4** | **Goat 5** | **Goat 1** | **Goat 2** | **Goat 3** | **Goat 4** | **Goat 5** |
| *P.lentiscus* | 164.0 | 11.8 | 0.0 | 15.7 | 0.0 | 0.0 | 280.9 | 0.0 | 511.2 | 0.5 | 0.0 | 46.1 | 0.0 | 83.8 | 0.1 | 0.0 |
| *O.europaea* var. *sylvestris* | 50.0 | 8.9 | 6.5 | 9.5 | 15.8 | 12.4 | 211.9 | 244.7 | 310.2 | 364.3 | 221.0 | 10.6 | 12.2 | 15.5 | 18.2 | 11.0 |
| *Q.coccifera* | 120.3 | 4.1 | 8.9 | 5.7 | 7.8 | 0.4 | 98.7 | 336.0 | 187.2 | 179.5 | 6.5 | 11.9 | 40.4 | 22.5 | 21.6 | 0.8 |
| *R.alaternus* | 69.8 | 1.8 | 17.5 | 0.0 | 12.1 | 8.0 | 43.0 | 661.3 | 0.0 | 280.7 | 142.5 | 3.0 | 46.2 | 0.0 | 19.6 | 9.9 |
| *R.lycioides* | 98.6 | 9.5 | 1.0 | 7.3 | 7.6 | 11.8 | 225.5 | 36.6 | 239.3 | 176.0 | 211.3 | 22.2 | 3.6 | 23.6 | 17.4 | 20.8 |
| Grasses (mix) | 14.4 | 1.8 | 3.5 | 2.0 | 1.3 | 0.7 | 43.0 | 132.3 | 66.5 | 31.1 | 12.4 | 0.6 | 1.9 | 1.0 | 0.4 | 0.2 |
| Grasses (ears) | 10.9 | 1.7 | 3.4 | 1.9 | 1.3 | 0.6 | 39.4 | 129.3 | 60.8 | 29.9 | 11.0 | 0.4 | 1.4 | 0.7 | 0.3 | 0.1 |
| *T.arvensis* | 20.2 | 0.0 | 0.0 | 0.8 | 0.0 | 1.5 | 0.0 | 0.0 | 28.0 | 0.0 | 26.3 | 0.0 | 0.0 | 0.6 | 0.0 | 0.5 |
| *C.intybus* | 33.5 | 20.1 | 12.6 | 18.4 | 16.7 | 28.6 | 478.5 | 477.2 | 597.9 | 384.8 | 509.7 | 16.0 | 16.0 | 20.0 | 12.9 | 17.1 |
| *R.ulmifolius* | 61.7 | 3.4 | 4.2 | 1.6 | 2.2 | 4.9 | 81.4 | 160.8 | 52.0 | 51.4 | 86.8 | 5.0 | 9.9 | 3.2 | 3.2 | 5.4 |
| Hay | 9.5 | 9.5 | 12.0 | 0.2 | 4.1 | 8.1 | 227.4 | 453.3 | 5.2 | 95.6 | 144.6 | 2.2 | 4.3 | 0.0 | 0.9 | 1.4 |
| Concentrated feed | 7.2 | 27.4 | 30.5 | 36.8 | 30.9 | 23.0 | 652.9 | 1154.9 | 1198.1 | 714.4 | 410.8 | 4.7 | 8.3 | 8.6 | 5.1 | 3.0 |

Table 2 data includes estimates for daily intake of DM (kg DM/day) and of total phenolic compounds (g GAE/day), showing that shrubs contributed with 60 to 81% of total phenolics ingested.

**Table 2. Intake of total dry matter (DM) and phenolic compounds per day.**

| | **Goat 1** | **Goat 2** | **Goat 3** | **Goat 4** | **Goat 5** | **AVG** |
|---|---|---|---|---|---|---|
| Total Intake (kg DM/day) | 2.38 | 3.78 | 3.26 | 2.31 | 1.78 | 2.70 ±0.804 |
| Intake Total Phenol. (g GAE /day) | 122.7 | 144.3 | 179.6 | 99.7 | 70.2 | 123.3 ±41.77 |
| % Phenol. Intake from shrubs | 76.4 | 71.0 | 81.0 | 77.1 | 60.7 | 72.4 ±8.84 |

Table 3 shows that the levels of total phenolic compounds excreted in the feces of these animals corresponded between 3 to 7% of the total phenolic compounds ingested per day, with an average concentration of 6.1 ± 0.70 mg GAE/g DM feces (Table 3). The importance of these levels of phenolic compounds in the fecal material towards the control of infective forms of strongyles is later demonstrated by the anthelmintic tests performed.

**Table 3. Levels of total phenolic compounds excreted in the feces.**

| | **Goat 1** | **Goat** 2 | **Goat 3** | **Goat 4** | **Goat 5** | **AVG** |
|---|---|---|---|---|---|---|
| AVG Intake Tot.Phenol. (g GAE/day) | 122.7 | 144.3 | 179.6 | 99.8 | 70.2 | 123.3 ±41.77 |
| Fecal output (g DM/day) | 812.1 | 977.2 | 859.2 | 929.7 | 732.8 | 862.2 ±96.21 |
| Fecal Tot. Phenol.(mg GAE/g fecal DM) | 5.59 | 6.34 | 5.20 | 6.88 | 6.58 | 6.1 ±0.70 |
| Fecal excretion Tot.Phenol. (g GAE/day) | 4.54 | 6.20 | 4.47 | 6.40 | 4.82 | 5.3 ±0.94 |
| **% Tot.Phenol. Excreted** | **3.70** | **4.29** | **2.49** | **6.41** | **6.87** | **4.8** ±1.85 |

Based on this data, the shrubs selected to extract bioactive compounds (i.e., phenolic compounds) were *Pistacia lentiscus, Quercus coccifera* and *Olea europaea spp. sylvestris,* due to their high content in total phenolics and widespread availability.

In several experiments, the individual ethanolic extracts from leaves of these shrubs had extraction yields between 18 and 32% (g of lyophilized extract/100 g DM of leaves) and, in the analytical determinations of the composition, values of:
338.0 ± 1.97, 380.5 ± 1.43 and 144.2 ± 0.28 mg GAE/g of extract in total phenolic compounds;
274.8 ± 0.65, 366.0 ± 1.02 and 71.9 ± 0.77 mg GAE/g of extract in total tannins;
187.5 ± 1.11, 317.9 ± 1.60 and 307.4 ± 1.98 mg quercetin equivalent (QE)/g of extract in flavonoids;
12.3 ± 0.43, 7.81 ± 0.15 and 0.5 ± 0.11 absorbance (ABS)/g of extract, in condensed tannins;
and a very strong presence, in a qualitative test, for saponins.
These values were obtained respectively for *Pistacia lentiscus, Quercus coccifera* and *Olea europaea spp. sylvestris,* using known procedures such as the Folin-Ciocalteau method (total phenolics and total tannins), the aluminum chloride method (flavovoids) and the butanol-HCl method (condensed tannins).

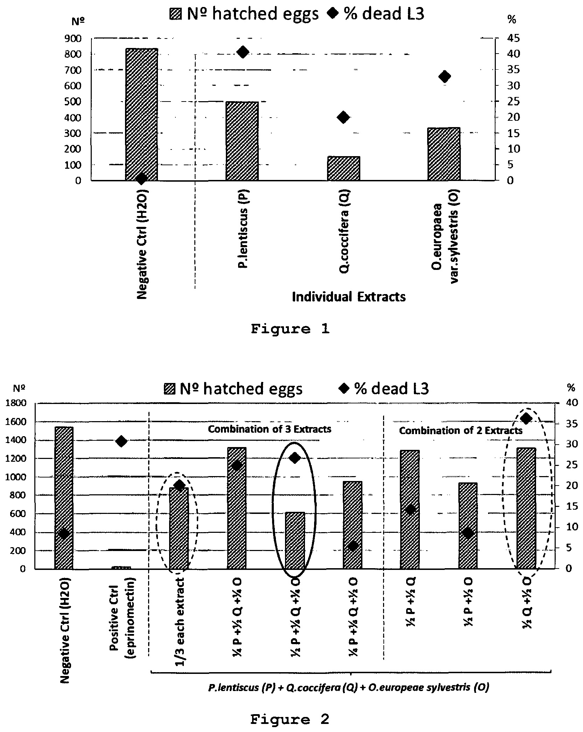

Anthelmintic tests, namely quantitative coprocultures where extracts are compared against controls, indicated greater efficacy in inhibiting the hatching of GIS eggs (number of hatched eggs) and larvicidal activity for infective forms (% dead L3 larvae) for combinations of the three shrub species, compared to individual use. Figure 1 shows tests performed using the individual extracts added to fecal material with known number of eggs per gram (EPG) of feces, using distilled water on control samples.

Figure 2 shows results from coproculture using combination of three or two of the extracts, using either distilled water or a synthetic anthelmintic as controls. Mixing the extracts from the three shrubs, either 1/3 each or at 50/25/25 (Figures 2), for *Pistacia lentiscus, Quercus coccifera* and *Olea europaea spp. sylvestris* respectively, were the best compromise between hatched eggs and dead L3.

Figure 2 also shows that the combination of *Quercus coccifera* and *Olea europaea spp. sylvestris,* in equal parts (50/50), although allowing a higher number of hatched eggs, resulted in high larvicidal activity (Figure 2).

The proportion of extracts from *Pistacia lentiscus, Quercus coccifera and Olea europaea spp. sylvestris* leaves between 33.3/33.3/33.3 and 50/25/25 wt%, respectively, was chosen based on data from Figure 2 and also from the proportion these shrubs represented on the intake of phenolics (Table 4) .

**Table 4. Intake of total phenolics (g GAE/day) from the 3 shrubs considered relative to all the available shrubs ingested, and target combination.**

| **Shrub species** | **Total Phenolics (g GAE/day)** | | | | | **% of total phenolics ingested** | **Target combination %** |
|---|---|---|---|---|---|---|---|
| | **Goat 1** | **Goat 2** | **Goat a** | **Goat 4** | **Goat 5** | | |
| *P.lentiscus* | 46.1 | 0.0 | 83.8 | 0.1 | 0.0 | 37.6 | 40 |
| *O.europaea* var. *sylvestris* | 10.6 | 12.2 | 15.5 | 18.2 | 11.0 | 26.6 | 30 |
| *Q.coccifera* | 11.9 | 40.4 | 22.5 | 21.6 | 0.8 | 32.6 | 30 |
| Intake Tot.Phenol. provided from all available shrubs (g GAE/day) | 98.8 | 112.4 | 148.7 | 80.0 | 48.0 | | |

Table 5 presents an example of the calculations for the composition, considering the target range for the three extracts, 40±5.0 / 30±2.5 / 30±2.5 % (g) of each lyophilized extract respectively *Pistacia lentiscus, Quercus coccifera and Olea europaea spp. Sylvestris.*

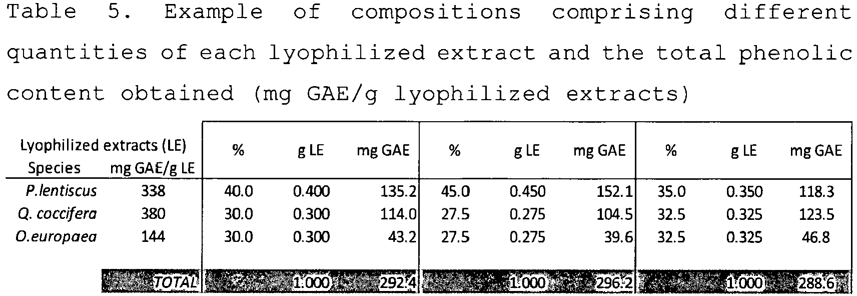

Table 6 presents an example considering 3 different levels of target daily intake of total phenolics for one level of concentrate feed (600 g/day) and the amount of nutritional supplement required per kg concentrate feed.

**Table 6. Daily intake of nutritional supplement to be fed per animal (g), according to target intakes of phenolic compounds from 50 to 100 g GAE/day, for a specific level of concentrate feed.**

| Target Intake of Total phenolics (g GAE/day) | Nutr. Suppl. total phenol. content (mg GAE/g DM) | Intake of Nutritional Supplement (g/day) | Concentrate feed (g/day) | Total intake (g/day) | Amount Nutr. Suppl. required (g/kg concentrate feed) |
|---|---|---|---|---|---|
| 50 | 292.4 | 171.0 | 600 | 771.0 | 285.0 |
| 75 | 292.4 | 265.5 | 600 | 865.5 | 427.5 |
| 100 | 292.4 | 342.0 | 600 | 942.0 | 570.0 |

### Bibliography

Ferreira LMM, Oliván M, Garcia U, Rodrigues MAM, Osoro K. 2005. Validation of the alkane technique to estimate diet selection of goats grazing heather-gorse vegetation communities. J. Sci. Food Agric. 85, 1636-1646. https://doi.org/10.1002/jsfa.2162
Ferreira LMM, Celaya R, Santos AS, Guedes CMV, Rodrigues MAM, Mayes RW, Osoro K. 2012. Evaluation of long-chain alcohols as diet composition markers in goats grazing heathland areas. Animal, 6 (4), 683-692. https://doi.org/10.1017/S1751731111001881
Notter DR, Burke JM, Miller JE, Morgan JLM. 2017. Factors affecting fecal egg counts in peri-parturient Katahdin ewes and their lambs. J. Anim. Sci. 95: 103-112. https://doi.org/10.2527/jas.2016.0955
Rochfort S, Parker AJ, Dunshea FR. 2008. Plant Bioactives for Ruminant Health and Productivity. Phytochemistry, 69: 299-322. https://doi.org/10.1016/j.phytochem.2007.08.017 Santos FO, Cerqueira APM, Branco A, Batatinha MJM, Botura MB. 2019. Anthelmintic activity of plants against gastrointestinal nematodes of goats: a review. Parasitology, 146 (10): 1233 - 1246. https://doi.org/10.1017/S0031182019000672

This description is of course not in any way restricted to the forms of implementation presented herein and any person with an average knowledge of the area can provide many possibilities for modification thereof without departing from the general idea as defined by the claims. The preferred forms of implementation described above can obviously be combined with each other. The following claims further define the preferred forms of implementation.

## Claims

1. A postpartum nutritional supplement composition for goats comprising:
between 33.3 and 50 wt% of Pistacia lentiscus leaf extract;
between 25 and 33.3 wt% of Quercus coccifera leaf extract; and
between 25 and 33.3 wt% of Olea europaea spp. sylvestris leaf extract;
with between 250 and 300 mg of total phenolic compounds in gallic acid equivalents per g of composition.

2. The composition according to the previous claim, wherein the composition comprises the extracts in a proportion 35/32.5/32.5 wt%, respectively.

3. The composition according to claim 1, wherein the composition comprises the extracts in a proportion the extracts proportions 40/30/30 wt%, respectively.

4. The composition according to claim 1, wherein the composition comprises the extracts in a proportion the extracts proportions 45/27.5/27.5 wt%, respectively.

5. Process to obtain the postpartum nutritional supplement composition for goats described in any of the previous claims comprising the following steps:
- Collecting leaves from *Pistacia lentiscus, Quercus coccifera* and *Olea europaea spp. sylvestris* shrubs, drying the leaves at a temperature between 40 and 45° C, and grinding the dried leaves through a 1 mm sieve;
- Individually mixing the dried and ground leaves of each shrub with a 70% v/v ethanol solution, using between 725 and 775 mL of ethanol solution per 100 ± 5 g of dried leaves of each shrub;
- Submitting each ethanol mixture to a temperature between 40 and 45 °C in an ultra-sound bath for a time between 2 and 3 h, obtaining an ethanol extract solution from each shrub;
- Filtering and evaporating the ethanol from each extract solution at a temperature between 40 to 45 °C, with ventilation;
- Lyophilizing each extract solution;
- Determining the content of total phenolic compounds in gallic acid equivalents in each lyophilized extract;
- Combining the individual lyophilized extracts in a proportion:
between 33.3 and 50 wt% of *Pistacia lentiscus* extract;
between 25 and 33.3 wt% of *Quercus coccifera* extract; and
between 25 and 33.3 wt% of *Olea europaea spp. sylvestris* extract.

6. Process according to the precious claim, wherein the lyophilized extracts are combined in a proportion of 35/32.5/32.5 wt%, respectively.

7. Process according to the precious claim, wherein the lyophilized extracts are combined in a proportion of 40/30/30 wt%, respectively.

8. Process according to the precious claim, wherein the lyophilized extracts are combined in a proportion of 45/27.5/27.5 wt%, respectively.

9. Process according to any of the claims 5 to 9, wherein the content of total phenolic compounds in the lyophilized extracts is measured by the Folin-Ciocalteau method.

10. Concentrate feed for goats comprising the postpartum nutritional supplement composition described in any of the claims 1 to 4.
